# DEMANDE DE BREVET EUROPEEN

(11) **EP 4 198 471 A1**
(43) Date de publication de la demande: **21.06.2023**
(21) Numéro de dépôt: 22213984.2
(22) Date de dépôt: 15.12.2022
(51) Int. Cl.: G01K 1/14, G01K 3/04, G01K 11/12

(54) **TÉMOIN THERMOCHROMIQUE, APPAREIL ÉLECTRIQUE ET TABLEAU ÉLECTRIQUE ASSOCIÉS**

(30) Priorité: 16.12.2021 FR 2113701
(71) Demandeur: SCHNEIDER ELECTRIC INDUSTRIES SAS, 92500 Rueil-Malmaison (FR)
(72) Inventeur: LEGENDRE, Philippe, 38600 FONTAINE (FR)
(74) Mandataire: Lavoix

(57) **Abrégé**

Ce témoin thermochromique (100) d'échauffement d'une borne (36) de connexion électrique d'un appareil électrique (20) comprend une pastille thermochromique, qui est configurée pour changer de couleur lorsque sa température dépasse une température de transition prédéterminée, et un membre de support (110), qui est réalisé en métal et qui est configuré pour être fixé à la borne. Selon l'invention, la pastille thermochromique (140) est configurée pour être fixée de manière réversible au membre de support.

## Description

La présente invention concerne un témoin thermochromique, un appareil électrique comprenant un tel témoin thermochromique ainsi qu'un tableau électrique comprenant un tel appareil électrique.

Dans le domaine des appareils électriques de puissance d'une installation électrique, les appareils électriques sont généralement montés sur un tableau électrique, lui-même logé dans un boitier ou une armoire électrique. Chaque appareil électrique comprend généralement au moins un bornier, auquel sont connectés des membres conducteurs tels que des câbles ou des tiges rigides - ou *busbar* en anglais -. Chaque membre conducteur est fixé, à une extrémité, au moyen d'organes de fixation tels que des vis ou des boulons. Si l'un de ces organes de fixation est mal serré, la résistance électrique de la connexion correspondante augmente, et lorsque qu'un courant circule au travers de cette connexion, un échauffement localisé se produit au niveau de cette connexion, ce qui est une source potentielle de dysfonctionnement, voire d'accident si réchauffement dépasse un certain seuil. Pour des raisons normatives et/ou de sécurité, il est donc nécessaire de surveiller la qualité des connexions électriques, par exemple en surveillant réchauffement de ces connexions.

Il est ainsi connu d'installer des capteurs de température au sein du tableau électrique pour une surveillance en continu des connexions électriques, cependant ces capteurs, leur mise en place et l'exploitation de leurs mesures ont un coût élevé.

Il est aussi connu d'effectuer des prises de vues par caméra thermique au cours de visites d'inspection, afin de détecter les points chauds d'un tableau électrique. Seulement, le boitier électrique logeant le tableau doit être ouvert pour prendre les prises de vues, et par sécurité le tableau électrique est souvent mis hors tension, aussi les prises de vues ne reflètent pas fidèlement le fonctionnement normal des appareils électriques. Il n'est pas possible de remonter à l'historique de fonctionnement des appareils électriques entre deux visites d'inspection. D'autre part, l'ouverture du tableau électrique génère des déplacements d'air qui tendent à refroidir les appareils électriques montés sur ce tableau.

Il est connu, notamment de WO-2020 243 259-A1, d'utiliser des témoins thermochromiques, c'est-à-dire des témoins configurés pour changer de couleur lorsque leur température dépasse un seuil prédéterminé. Chaque témoin thermochromique comprend un membre de support en forme de patte, qui est fixée par une première extrémité à une borne de connexion respective et dont une deuxième extrémité est recouverte d'un vernis thermochromique irréversible, c'est-à-dire un vernis qui change de couleur de manière irréversible lorsque la température dépasse un seuil prédéterminé. Une inspection visuelle permet ainsi de constater qu'un échauffement a eu lieu.

Cependant, ces dispositifs présentent de nombreux inconvénients. D'une part, lorsqu'un échauffement a eu lieu, il faut ensuite remplacer les témoins ayant changé de couleur, ce qui demande de démonter la connexion correspondante, ce qui prend du temps. De plus, chaque témoin est influencé par la température globale qui règne dans le boitier électrique, ce qui entraine une incertitude sur réchauffement réellement subi par la connexion concernée. Il existe donc un risque de ne pas détecter un échauffement anormal.

KR-101 222 139-B1 décrit, par exemple, un manchon isolant qui est disposé autour d'une connexion électrique et qui comprend un témoin thermochromique. Le témoin thermochromique donne une information sur la température du manchon, qui ne reflète qu'indirectement la température de la connexion électrique et manque ainsi de précision.

C'est à ces problèmes qu'entend plus particulièrement remédier l'invention, en proposant un témoin thermochromique qui soit précis et pratique d'utilisation.

À cet effet, l'invention concerne un témoin thermochromique d'échauffement d'une borne de connexion électrique d'un appareil électrique, le témoin thermochromique comprenant une pastille thermochromique et un membre de support, dans lequel la pastille thermochromique est configurée pour changer de couleur lorsque sa température dépasse une température de transition prédéterminée, tandis que le membre de support est configuré pour être fixé à la borne et est réalisé en métal.

Selon l'invention, la pastille thermochromique est configurée pour être fixée de manière réversible au membre de support.

Grâce à l'invention, une fois qu'un témoin a changé de couleur de façon irréversible, l'utilisateur remplace seulement la pastille thermochromique du témoin correspondant sans avoir à démonter la connexion électrique correspondante, ce qui est particulièrement pratique et rapide. En outre, selon les applications, l'utilisateur peut installer des pastilles thermochromiques changeant de couleur à des seuils de températures différents, permettant une supervision précise des connexions électriques.

Selon des aspects avantageux mais non obligatoires de l'invention, un tel témoin thermochromique peut incorporer une ou plusieurs des caractéristiques suivantes prises isolément ou selon toute combinaison techniquement admissible :
- la pastille thermochromique est configurée pour changer de couleur de manière irréversible lorsque sa température dépasse la température de transition.
- La pastille thermochromique est réalisée en un matériau déformable élastiquement et intégrant des pigments thermochromiques, la pastille thermochromique étant configurée pour être fixée au membre de support par déformation élastique de la pastille thermochromique.

- Le matériau de la pastille thermochromique est un matériau polymère synthétique élastomère, par exemple un matériau silicone.
- La pastille thermochromique ménage une cavité, qui est configurée pour coopérer, notamment par complémentarité de forme, avec une portion d'indication du membre de support, de manière à de manière à maintenir la pastille thermochromique assemblée au membre de support.
- Le membre de support est réalisé en un matériau thermiquement conducteur et comprend :
   - une portion de fixation, configurée pour être fixée à une borne de connexion électrique, et
   - une portion d'indication, différente de la portion de fixation et sur laquelle la pastille thermochromique est fixée de manière réversible.
- Le membre de support est une lame de forme allongée comprenant une première extrémité formant la portion de fixation et une deuxième extrémité, opposée à la première extrémité et formant la portion d'indication, alors que la pastille thermochromique est fixée à la portion d'indication par glissement de la portion d'indication dans une cavité de la pastille thermochromique.

L'invention concerne aussi un appareil électrique, par exemple un dispositif de commutation, comprenant au moins une borne de connexion électrique et au moins un témoin thermochromique tel que défini précédemment, chaque témoin thermochromique étant associé à une borne respective, dans lequel chaque membre de support comprend une portion de fixation, par laquelle ce membre de support est fixée à la borne correspondante.

Avantageusement :
- l'appareil électrique comprend un capot, qui ménage un volume de réception de chaque témoin thermochromique, le capot étant configuré pour réduire les échanges de chaleur entre le volume de réception et l'extérieur du capot.
- L'appareil électrique comprend un bornier avec plusieurs bornes de connexion électriques adjacentes, avec au moins un témoin thermochromique monté sur une borne respective, alors que le capot comprend des cloisons, qui divisent le volume interne en plusieurs compartiments, chaque compartiment étant configuré pour recevoir une borne respective et le témoin thermochromique associé, et pour réduire les échanges de chaleur entre chaque compartiment.
- Le capot comprend une façade réalisée en un matériau transparent, de manière que chaque pastille thermochromique est visible depuis l'extérieur du capot.
- La façade est réalisé en un matériau polymère synthétique, par exemple du polycarbonate.

L'invention concerne également un tableau électrique, comprenant au moins un appareil électrique tel que défini précédemment, dans lequel l'appareil électrique est fixé sur un panneau du tableau électrique.

L'invention sera mieux comprise, et d'autres avantages de celle-ci apparaîtront plus clairement à la lumière de la description qui va suivre, d'un mode de réalisation d'une pastille thermochromique, d'un témoin thermochromique, d'un appareil électrique et d'un tableau électrique, conformes à son principe, donnée uniquement à titre d'exemple et faite en référence aux dessins annexés, dans lesquels :
- [Fig 1] la figure 1 est une vue en perspective d'un tableau électrique conforme à l'invention, comprenant un appareil électrique lui-aussi conforme à l'invention ;
- [Fig 2] la figure 2 est une vue en perspective partiellement éclatée de l'appareil électrique de la figure 1, et
- [Fig 3] la figure 3 est une vue en perspective partiellement éclatée de certains éléments de l'appareil électrique de la figure 1, selon un autre angle de vue, certains éléments étant omis.

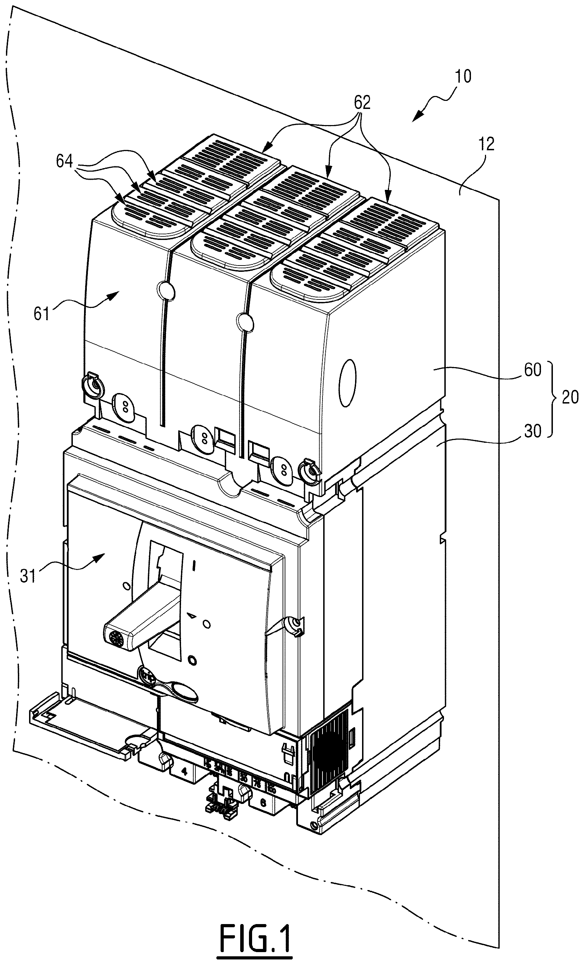

Un tableau électrique 10 est représenté schématiquement sur la figure 1. Le tableau électrique 10 est logé dans un boitier électrique, ou armoire électrique. Le boitier électrique n'est pas représenté. Le tableau électrique 10 comprend un panneau 12, qui est considéré comme plan, qui s'étend ici verticalement et sur lequel est fixé un appareil électrique 20. La description est faite en regard de l'orientation des divers éléments représentés sur les dessins, sachant que ces éléments peuvent être orientés différemment dans la réalité.

L'appareil électrique 20 est ici un appareil de commutation, en particulier un disjoncteur. En variante non représentée, l'appareil électrique 20 est un contacteur, ou bien un appareil de mesure tel qu'un compteur d'énergie, cette liste n'étant pas limitative. L'appareil électrique 20 est ici fixé directement sur le panneau 12, par exemple par vissage. En variante non représentée, l'appareil électrique 20 est fixé sur le panneau 12 par l'intermédiaire d'un élément de fixation, par exemple un rail de fixation tel qu'un rail DIN ou équivalent.

L'appareil électrique 20 comprend un boitier principal 30, qui présente ici une forme de parallélépipède et qui comprend une face avant 31, orientée à l'opposé du panneau 12 lorsque l'appareil électrique 20 est fixé sur ce panneau 12, et une face supérieure 32, sur laquelle est agencé un bornier 34. Autrement dit, la face avant 31 est orientée vers un utilisateur lorsque cet utilisateur se tient devant le panneau 12 et que l'appareil électrique 20 est fixé sur ce panneau 12.

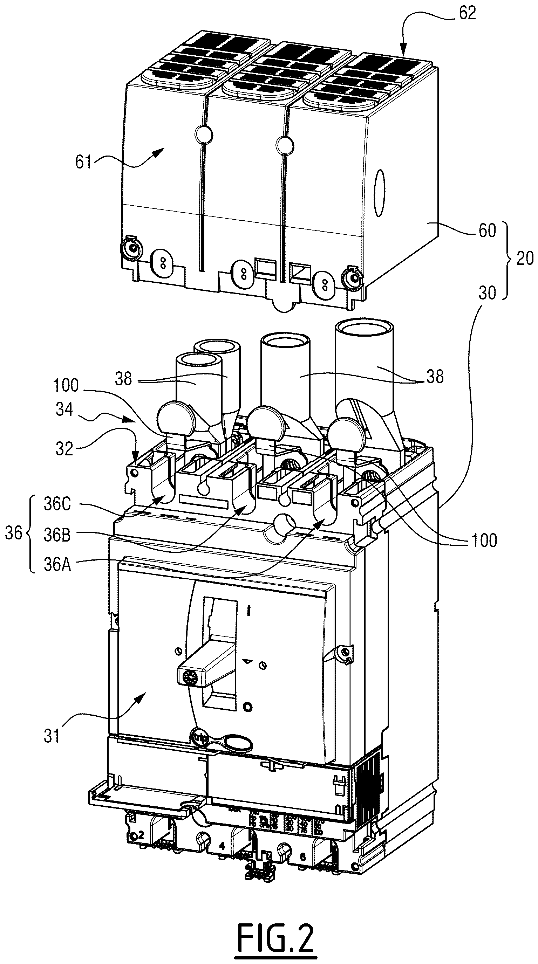

Sur la figure 1, le bornier 34 est représenté caché par un capot 60 de l'appareil électrique 20, alors que dans la réalité, comme décrit plus loin, le capot 60 comprend une façade 61 transparente, permettant de voir le bornier 34 au travers du capot 60. Le bornier 34 est ainsi reçu dans un volume de réception V60 du capot 60. Sur la figure 2, le capot 60 est éloigné du boitier principal 30, révélant le bornier 34. De préférence, le capot 60 est assemblé au boitier principal 30 par clipsage, autrement dit à la main et sans outil. De préférence, un outil est nécessaire pour démonter le capot 60 du boitier principal 30, de manière à éviter les démontages intempestifs du capot 60. Selon une variante non représentée, un outil est nécessaire à la fois pour monter le capot 60 sur le boitier principal 30 et pour démonter le capot 60 du boitier principal 30.

La façade 61 du capot 60 est orientée dans le même sens que la face avant 31 du boitier principal 30 lorsque le capot 60 est assemblé au boitier principal 30. Autrement dit, la façade 61 est orientée vers un utilisateur lorsque cet utilisateur se tient devant le panneau 12 sur lequel est fixé l'appareil électrique 20.

La façade 61 est avantageusement réalisée en un matériau transparent, de manière qu'un utilisateur puisse voir l'intérieur du capot 60. La façade 61 est réalisé en un matériau polymère synthétique, par exemple du polycarbonate. De préférence, le capot 60 est entièrement réalisé en un matériau transparent. De préférence, le capot 60 est réalisé d'une seule pièce, par exemple par injection sous pression et à chaud. Alternativement, le capot 60 est réalisé par un assemblage de pièces, qui sont par exemple clipsées et/ou collées les unes aux autres.

Le capot 60 comprend aussi un côté supérieur 62, qui est ici parallèle à la face supérieure 32 du boitier principal 30 lorsque le capot 60 est assemblé au boitier principal 30. Le côté supérieur 62 comprend avantageusement des évents 64. Les évents 64 sont ici des pièces rapportées au reste du capot 60 et ménagent des fentes, les évents 64 étant configurés pour évacuer à l'extérieur du capot 60 une partie de la chaleur générée par réchauffement des connexions du bornier 34 lorsque l'appareil électrique 20 est en cours d'utilisation, de manière à réguler la température régnant dans le volume de réception V60.

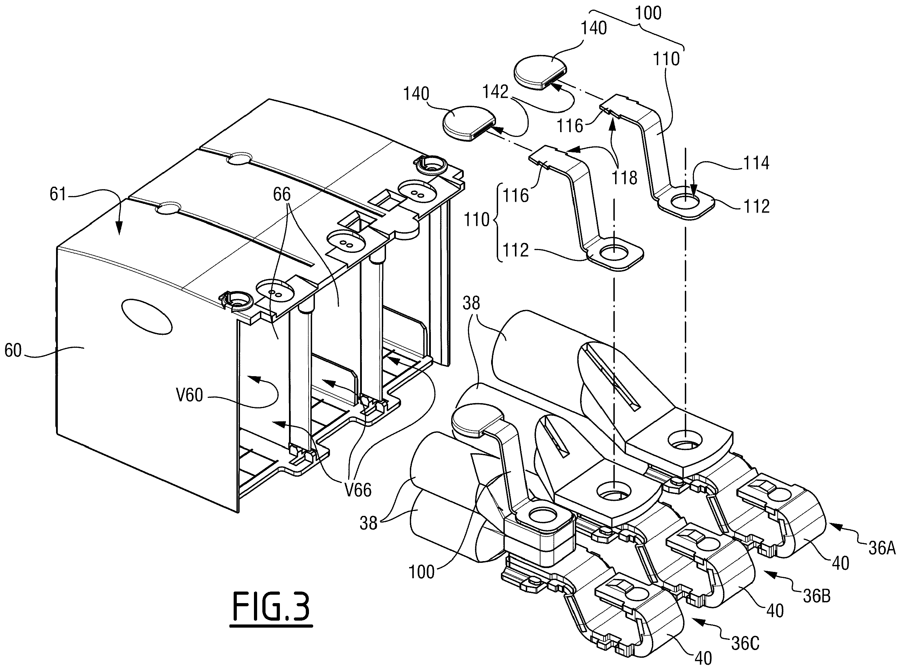

L'appareil électrique 20 est ici configuré pour être connecté à une source d'alimentation triphasée, aussi le bornier 34 comprend trois bornes de connexion électrique adjacentes, référencées individuellement 36A, 36B et 36C ou désignées de manière générale en tant que bornes 36. La source d'alimentation n'est pas représentée. Sur les figures 2 et 3, la borne 36A est située sur la droite, la borne 36C est située sur la gauche, tandis que la borne 36B est agencée entre les deux autres bornes 36A et 36C. Les bornes 36 fonctionnent de la même façon et sont de préférences identiques, ce qui est valable pour une des bornes 36 étant transposables aux autres bornes 36.

En variante non représentée le bornier 34 comprend un nombre de bornes 36 différent, par exemple deux bornes 36 adjacentes si l'appareil électrique 20 est configuré pour être connecté à une source d'alimentation biphasée. Plus généralement, chaque borne 36 du bornier 34 est associé à une phase électrique de la source d'alimentation.

Les bornes 36 sont reliées à des conducteurs électriques, représentés ici par des cosses 38, chaque cosse 38 étant configurée pour être sertie à une extrémité respective d'un conducteur électrique. Les cosses 38 ne font pas partie de l'appareil électrique 20 mais servent à préciser le contexte de l'invention. Dans l'exemple illustré, les cosses 38 fixées sur chacune de bornes 36A, 36B et 36C sont de tailles différentes. En particulier, la borne 36C est ici fixée à deux cosses 38.

Pour chaque borne 36, l'appareil électrique 20 comprend un membre conducteur 40 respectif, qui est en parti logé à l'intérieur du boitier principal 30 et qui est configuré pour être connecté aux cosses 38 à l'extérieur du boitier principal 30. Sur la figure 3, seuls les membres conducteurs 40 sont représentés, le reste du boitier principal 30 n'étant pas représenté. Dans l'exemple illustré, les cosses 38 sont assemblées au membre conducteur 40 correspondant au moyen d'organes de fixation, par exemple des vis ou des boulons. Les organes de fixation ne sont pas représentés.

Au niveau de chaque borne 36, la connexion électrique correspondante présente une certaine résistance électrique et s'échauffe naturellement lorsqu'un courant électrique traverse cette connexion. Lorsque la connexion électrique entre un membre conducteur 40 et la ou les cosses 38 est défaillante, par exemple lorsque les organes de fixation correspondants sont mal serrés, la résistance électrique apparente de la borne 36 correspondante augmente. Si cette borne 36 est traversée par un courant électrique, un échauffement localisé au niveau de cette borne 36 survient. Par mesure de sécurité, il convient de suivre que ces échauffements, notamment il convient de suivre si ces échauffements dépassent un seuil de température prédéterminé, le seuil de température étant choisi par l'utilisateur en fonction des contraintes de sécurité qui le concernent, notamment en fonction des contraintes normatives. Par exemple, la norme IEC 60947-2 : 2016 -et son amendement de 2019 - demande de suivre les échauffements des connexions électriques au-delà de 120°C.

Pour le suivi de ces échauffements, l'appareil électrique 20 comprend des témoins thermochromiques 100.

Chaque témoin thermochromique 100 est associé à une borne 36 respective. Ainsi, l'appareil électrique 20 illustré dans cet exemple comprend ici trois témoins thermochromiques 100. Les témoins thermochromiques 100 fonctionnent de la même façon, et sont de préférence identiques les uns aux autres. Ce qui est valable pour un des témoins thermochromiques 100 est transposable aux autres témoins thermochromiques 100. En variante non représentée, seule une partie des bornes 36 est équipée d'un témoin thermochromique 100.

Chaque témoin thermochromique 100 comprend un membre de support 110, sur lequel est fixé une pastille thermochromique 140. Chaque pastille thermochromique 140 est configurée pour être fixée de manière réversible au membre de support 110 correspondant. Par « réversible », on entend qu'un utilisateur peut fixer une pastille thermochromique 140 au membre support 110 correspondant, puis enlever cette pastille thermochromique 140 de ce membre support 110 sans endommager ni la pastille thermochromique 110 ni le membre support 110.

Chaque pastille thermochromique 140 est réalisée en un matériau thermochromique. Par matériau thermochromique, on entend un matériau dont la couleur, visible pour l'être humain, change lorsque la température de ce matériau dépasse une température de transition prédéterminée. La température de transition est choisie bien supérieure à la température ambiante régnant dans un coffre électrique. Typiquement, la température ambiante est comprise entre 0°C et 60°C, tandis que la température de transition est supérieure à 80°C.

Un tel matériau thermochromique est ici produit en dispersant un pigment thermochromique, de préférence sous forme de poudre, dans une matrice transparente ou translucide. Chaque pigment thermochromique est donc caractérisé par une température de transition prédéterminée, spécifique à ce pigment, par sa couleur d'origine, lorsque le pigment est maintenu à température ambiante, et par sa couleur dite « couleur activée », une fois que la température de transition est dépassée.

Selon les applications, un pigment thermochromique change de couleur de manière réversible, c'est-à-dire que ce pigment retrouve sa couleur d'origine lorsque la température décroit en deçà de la température de transition, ou bien de manière irréversible, c'est-à-dire qu'une fois que la température du pigment a dépassé la température de transition, alors la couleur du pigment reste la couleur activée.

La matrice de la pastille thermochromique 140 est avantageusement un matériau polymère synthétique élastomère. La matrice de la pastille thermochromique 140 est par exemple un matériau polymère thermoplastique. La pastille thermochromique 140 est avantageusement fabriquée par injection sous pression et à chaud. Lorsque les pigments thermochromiques choisis sont irréversibles, la température de transition vitreuse de ce matériau thermoplastique est choisie bien inférieure à la température de transition du pigment thermochromique considéré. Par « bien inférieure », on entend par exemple que la température de fusion est inférieure de 20°C à la température de transition du pigment thermochromique.

Alternativement, la matrice de la pastille thermochromique 140 est un matériau polymère thermodurcissable, de préférence polymérisable à une température bien inférieure à la température de transition des pigments thermochromiques.

Dans l'exemple illustré, la matrice des pastilles thermochromiques 140 est du polysiloxane, dit aussi silicone en français ou en anglais, conçu pour polymériser à une température inférieure de l'ordre de 80°C, tandis que la température de transition des pigments thermochromiques est de l'ordre de 110°C.

Il est ainsi possible de mélanger plusieurs pigments thermochromiques, de manière à obtenir un mélange présentant plusieurs températures de transition, avec une couleur apparente résultant de la couleur, à la température considérée, de chacun des pigments composant du mélange et des proportions relatives de chaque pigment dans le mélange. Il est bien entendu possible de mélanger des pigments qui changent de couleur de manière réversible avec des pigments qui changent de couleur de manière irréversible.

Dans l'exemple illustré, le matériau thermochromique ne comprend qu'une seule température de transition, à 110°C.

Le membre de support 110 est réalisé en un matériau thermiquement conducteur, de préférence un métal ou un alliage métallique, de préférence encore un métal ou un alliage métallique inoxydable. Le membre de support 110 est par exemple réalisé en cuivre ou un de ses alliages, ou encore en aluminium ou un de ses alliages.

Le membre de support 110 est ici une lame, qui présente une forme allongée avec deux extrémités opposées. À l'une de ses deux extrémités, le membre de support 110 comprend une portion de fixation 112, qui est configurée pour être fixée à la borne 36 correspondante. La portion de fixation 112 comprend ici un alésage 114, configuré pour coopérer avec l'organe de fixation servant à fixer la ou les cosses 38 au membre conducteur 40 correspondant.

À l'autre de ses deux extrémités, le membre de support 110 comprend une portion d'indication 116, configurée pour recevoir, de manière réversible, un exemplaire de pastille thermochromique 140. Dit autrement, la portion d'indication 116 est différente de la portion de fixation 112, chaque pastille thermochromique 140 étant configurée pour être fixée de manière réversible à la portion d'indication 116 correspondante. Le membre de support 110 étant en métal, la portion d'indication 116 présente une température qui est considérée comme sensiblement égale à une température de la portion de fixation 112.

La pastille thermochromique 140 est configurée pour être fixée au membre de support 110 par déformation élastique de la pastille thermochromique 140. Dans l'exemple illustré, la portion d'indication 116 présente une forme de patte avec des ergots 118, tandis que la pastille thermochromique 140 ménage une cavité 142 de réception de la portion d'indication 116, la cavité 142 présentant une forme complémentaire de la portion d'indication 116. On assure ainsi une surface de contact suffisante entre la pastille thermochromique 140 et la portion d'indication 116, pour qu'une température de la pastille thermochromique 140 et qu'une température de la portion d'indication 116 sur laquelle cette pastille thermochromique 140 est fixée soient considérées comme égales.

Le montage de la pastille thermochromique 140 sur le membre de support 110 correspondant se fait par glissement de la portion d'indication 116 dans la cavité 142, la déformation élastique de la pastille thermochromique 140 accommodant le passage des ergots 118. Le montage de la pastille thermochromique 140 sur le membre de support 110 correspondant est particulièrement simple et rapide.

La pastille thermochromique 140 est ensuite maintenue assemblée au membre de support 110 par complémentarité de forme de la pastille thermochromique 140 avec le membre de support 110. Dans l'exemple illustré, les ergots 118 coopèrent avec la cavité 142, par complémentarité de forme, de manière à maintenir la pastille thermochromique 140 assemblée au membre de support 110.

Par exemple, la cavité de réception 142 présente une forme oblongue à section rectangulaire, de manière à permettre l'insertion d'une extrémité distale de la portion d'indication 116. La cavité de réception 142 comporte aussi des rétrécissements internes déformables, qui sont configurés pour coopérer avec les ergots 118, par exemple pour empêcher un retrait accidentel de la portion d'indication 116 hors de la cavité 142 de la pastille 140.

Lors du démontage d'une pastille thermochromique 140 de la portion d'indication 116, l'utilisateur titre simplement sur cette pastille thermochromique 140, à la main et sans outil, pour sortir la portion d'indication 116 de la cavité 142, la pastille thermochromique 140 se déformant élastiquement pour accommoder le passage des ergots 118. L'utilisateur peut ensuite mettre en place une nouvelle pastille thermochromique 140 de son choix, que ce soit une pastille thermochromique 140 du même type ou d'un type différent de la pastille thermochromique précédente. Un tel témoin thermochromique 100 est ainsi particulièrement pratique d'utilisation.

Le membre de support 110 est agencé, par rapport aux cosses 38, du côté opposé au membre conducteur 40. Autrement dit, le membre de support 110 est situé vers l'avant du boitier 30 par rapport aux cosses 38, de manière que chaque pastille thermochromique 140, montée sur la portion d'indication 116 correspondante, est située du côté de la face avant 31 du boitier principal 30. Ainsi, lorsque l'appareil électrique 20 est fixé au panneau 12, chaque pastille thermochromique 140 est visible par un utilisateur faisant face au panneau 12. Lorsque le capot 60 est monté sur le boitier principal 30, chaque pastille thermochromique 100 est visible depuis l'extérieur du capot 60, au travers de la façade 61 transparente. Pour chaque témoin thermochromique 100, la portion de fixation 112 et la portion d'indication 116 sont éloignées l'une de l'autre, de manière à accommoder le montage de plusieurs types de cosses 38 et à faciliter l'accès à la portion d'indication 116, par exemple pour remplacer le témoin thermochromique 140 correspondant.

Lorsque l'appareil électrique 30 est en cours d'utilisation, le passage du courant électrique entraine un échauffement de chaque borne 36. La chaleur de chaque borne 36 est transmise, par l'intermédiaire de chaque membre de support 110, depuis la portion de fixation 112 jusqu'à la pastille thermochromique 140 correspondante. Une partie de cette chaleur transmise par le membre support est dissipée, par exemple par radiation, ou bien à cause de mouvements convectifs de l'air environnant, ce qui fait que la température de la portion d'indication 116, et donc de la pastille thermochromique 110, est inférieure à la température de la portion de fixation 112.

Le capot 60 est avantageusement configuré pour réduire les flux d'air tendant à refroidir les témoins thermochromiques 100, autrement dit pour réduire les échanges de chaleur entre le volume de réception V60 et l'extérieur du capot 60. Dans l'exemple illustré, lorsque la température de la portion de fixation 112 est de l'ordre de 120°C et que la température de l'air environnant est de 40 C, en l'absence de capot 60, la température de la portion d'indication 116 est de l'ordre de 80 C, tandis qu'en présence du capot 60, la température de la portion d'indication 116 est de l'ordre de 110°C, ce qui correspond à la température de transition des pigments thermochromiques choisis L'influence de la température de l'air environnant est réduite, ce qui permet une indication plus précise de chaque témoin thermochromique 100.

Le capot 60 comprend avantageusement des cloisons 66, qui divisent le volume de réception V60 en compartiments V66. Chaque compartiment V66 est configuré pour recevoir une borne 36 respective et le témoin thermochromique 100 associé à cette borne 36. Ainsi lorsque le capot 60 est assemblé au boitier principal 30, chaque borne 36 et le témoin thermochromique 100 associé sont séparés des autres bornes 36 et témoins thermochromiques 100 associés. Les échanges de chaleur entre chaque compartiment V66, en particulier les échanges de chaleur par convexion, sont ainsi réduits. Autrement dit, l'influence de chaque borne 36 sur les témoins thermochromiques 100 montés sur les autres bornes 36 est réduite, ce qui permet une indication plus précise de chaque témoin thermochromique 100.

Dans l'exemple illustré, les cloisons 66 sont fabriquées avec le reste du capot 60, en une seule étape, par exemple par injection à chaud sous pression. Alternativement, les cloisons 66 sont des pièces rapportées au reste du capot 60, les cloisons 66 étant, par exemple, assemblées au reste du capot 60 par clipsage et/ou collage.

Toute caractéristique décrite pour un mode de réalisation ou une variante dans ce qui précède peut être mise en œuvre pour les autres modes de réalisation et variantes décrits précédemment, pour autant que techniquement faisable.

## Revendications

1. Témoin thermochromique (100) d'échauffement d'une borne (36) de connexion électrique d'un appareil électrique (20), le témoin thermochromique comprenant une pastille thermochromique (140) et un membre de support (110), dans lequel :
- la pastille thermochromique (140) est configurée pour changer de couleur lorsque sa température dépasse une température de transition prédéterminée,
- le membre de support (110) est configuré pour être fixé à la borne et est réalisé en métal,
**caractérisé en ce que** la pastille thermochromique (140) est configurée pour être fixée de manière réversible au membre de support (110).

2. Témoin thermochromique (100) selon la revendication 1, dans lequel la pastille thermochromique (140) est configurée pour changer de couleur de manière irréversible lorsque sa température dépasse la température de transition.

3. Témoin thermochromique (100) selon l'une quelconque des revendications 1 ou 2, dans lequel la pastille thermochromique (140) est réalisée en un matériau déformable élastiquement et intégrant des pigments thermochromiques, la pastille thermochromique étant configurée pour être fixée au membre de support (110) par déformation élastique de la pastille thermochromique.

4. Témoin thermochromique (100) selon la revendication 3, dans lequel le matériau de la pastille thermochromique (140) est un matériau polymère synthétique élastomère, par exemple un matériau silicone.

5. Témoin thermochromique (100) selon l'une quelconque des revendications 3 ou 4, dans lequel la pastille thermochromique (140) ménage une cavité (142), qui est configurée pour coopérer, notamment par complémentarité de forme, avec une portion d'indication (116) du membre de support (110), de manière à de manière à maintenir la pastille thermochromique (140) assemblée au membre de support (110).

6. Témoin thermochromique (100) selon l'une quelconque des revendications précédentes, dans lequel le membre de support (110) est réalisé en un matériau thermiquement conducteur et comprend :
- une portion de fixation (112), configurée pour être fixée à une borne (36) de connexion électrique, et
- une portion d'indication (116), différente de la portion de fixation (112) et sur laquelle la pastille thermochromique (140) est fixée de manière réversible.

7. Témoin thermochromique (100) selon la revendication 6, dans lequel :
- le membre de support (110) est une lame de forme allongée comprenant une première extrémité formant la portion de fixation (112) et une deuxième extrémité, opposée à la première extrémité et formant la portion d'indication (116), et
- la pastille thermochromique (140) est fixée à la portion d'indication (116) par glissement de la portion d'indication (116) dans une cavité (142) de la pastille thermochromique (140).

8. Appareil électrique (20), par exemple un dispositif de commutation, comprenant au moins une borne (36) de connexion électrique et au moins un témoin thermochromique (100) selon l'une quelconque des revendications 1 à 7, chaque témoin thermochromique étant associé à une borne respective, dans lequel chaque membre de support (110) comprend une portion de fixation (112), par laquelle ce membre de support est fixée à la borne (36) correspondante.

9. Appareil électrique (20) selon la revendication 8, comprenant un capot (60), qui ménage un volume de réception (V60) de chaque témoin thermochromique (100), le capot étant configuré pour réduire les échanges de chaleur entre le volume de réception (V60) et l'extérieur du capot (60).

10. Appareil électrique (20) selon la revendication 9, dans lequel :
- l'appareil électrique comprend un bornier (34) avec plusieurs bornes (36) de connexion électriques adjacentes, avec au moins un témoin thermochromique (100) monté sur une borne respective,
- le capot (60) comprend des cloisons (66), qui divisent le volume interne (V60) en plusieurs compartiments (V66), chaque compartiment (V66) étant configuré :
• pour recevoir une borne (36) respective et le témoin thermochromique (100) associé,
• pour réduire les échanges de chaleur entre chaque compartiment (V66).

11. Appareil électrique (20) selon l'une quelconque des revendications 9 ou 10, dans lequel le capot (60) comprend une façade (61) réalisée en un matériau transparent, de manière que chaque pastille thermochromique (140) est visible depuis l'extérieur du capot (60).

12. Appareil électrique (20) selon l'une la revendication précédente, dans lequel la façade (61) est réalisé en un matériau polymère synthétique, par exemple du polycarbonate.

13. Tableau électrique (10), comprenant au moins un appareil électrique (20) selon l'une quelconque des revendications 8 à 12, dans lequel l'appareil électrique (20) est fixé sur un panneau (12) du tableau électrique.

## Revendications modifiées

### Revendications modifiées conformément à la règle 137(2) CBE.

1. Appareil électrique (20), par exemple un dispositif de commutation, comprenant au moins une borne (36) de connexion électrique et au moins un témoin thermochromique (100), chaque témoin thermochromique étant associé à une borne respective, dans lequel :
- chaque membre de support (110) comprend une portion de fixation (112), par laquelle ce membre de support est fixée à la borne (36) correspondante.
- le témoin thermochromique comprend une pastille thermochromique (140) et un membre de support (110), dans lequel :
- la pastille thermochromique (140) est configurée pour changer de couleur lorsque sa température dépasse une température de transition prédéterminée,
- le membre de support (110) est configuré pour être fixé à la borne et est réalisé en métal,
- la pastille thermochromique (140) est configurée pour être fixée de manière réversible au membre de support (110),
**caractérisé en ce que** l'appareil électrique (20) comprend un capot (60), qui ménage un volume de réception (V60) de chaque témoin thermochromique (100), le capot étant configuré pour réduire les échanges de chaleur entre le volume de réception (V60) et l'extérieur du capot (60).

2. Appareil électrique (20) selon la revendication 1, dans lequel la pastille thermochromique (140) est configurée pour changer de couleur de manière irréversible lorsque sa température dépasse la température de transition.

3. Appareil électrique (20) selon l'une quelconque des revendications 1 ou 2, dans lequel la pastille thermochromique (140) est réalisée en un matériau déformable élastiquement et intégrant des pigments thermochromiques, la pastille thermochromique étant configurée pour être fixée au membre de support (110) par déformation élastique de la pastille thermochromique.

4. Appareil électrique (20) selon la revendication 3, dans lequel le matériau de la pastille thermochromique (140) est un matériau polymère synthétique élastomère, par exemple un matériau silicone.

5. Appareil électrique (20) selon l'une quelconque des revendications 3 ou 4, dans lequel la pastille thermochromique (140) ménage une cavité (142), qui est configurée pour coopérer, notamment par complémentarité de forme, avec une portion d'indication (116) du membre de support (110), de manière à de manière à maintenir la pastille thermochromique (140) assemblée au membre de support (110).

6. Appareil électrique (20) selon l'une quelconque des revendications précédentes, dans lequel le membre de support (110) est réalisé en un matériau thermiquement conducteur et comprend :
- une portion de fixation (112), configurée pour être fixée à une borne (36) de connexion électrique, et
- une portion d'indication (116), différente de la portion de fixation (112) et sur laquelle la pastille thermochromique (140) est fixée de manière réversible.

7. Appareil électrique (20) selon la revendication 6, dans lequel :
- le membre de support (110) est une lame de forme allongée comprenant une première extrémité formant la portion de fixation (112) et une deuxième extrémité, opposée à la première extrémité et formant la portion d'indication (116), et
- la pastille thermochromique (140) est fixée à la portion d'indication (116) par glissement de la portion d'indication (116) dans une cavité (142) de la pastille thermochromique (140).

8. Appareil électrique (20) selon l'une quelconque des revendications 1 à 7, dans lequel :
- l'appareil électrique comprend un bornier (34) avec plusieurs bornes (36) de connexion électriques adjacentes, avec au moins un témoin thermochromique (100) monté sur une borne respective,
- le capot (60) comprend des cloisons (66), qui divisent le volume interne (V60) en plusieurs compartiments (V66), chaque compartiment (V66) étant configuré :
• pour recevoir une borne (36) respective et le témoin thermochromique (100) associé,
• pour réduire les échanges de chaleur entre chaque compartiment (V66).

9. Appareil électrique (20) selon l'une quelconque des revendications 1 à 8, dans lequel le capot (60) comprend une façade (61) réalisée en un matériau transparent, de manière que chaque pastille thermochromique (140) est visible depuis l'extérieur du capot (60).

10. Appareil électrique (20) selon la revendication précédente, dans lequel la façade (61) est réalisé en un matériau polymère synthétique, par exemple du polycarbonate.

11. Tableau électrique (10), comprenant au moins un appareil électrique (20) selon l'une quelconque des revendications 1 à 10, dans lequel l'appareil électrique (20) est fixé sur un panneau (12) du tableau électrique.
